Europäisches Patentamt

(19) European Patent Office

Office européen des brevets

(11) Publication number: **0 079 784**
A1

# (12) EUROPEAN PATENT APPLICATION

(21) Application number: **82306056.1**

(22) Date of filing: **15.11.82**

(51) Int. Cl.³: **D 21 H 3/78**
**C 09 C 1/36**

(30) Priority: **16.11.81 US 321484**

(43) Date of publication of application:
**25.05.83 Bulletin 83/21**

(84) Designated Contracting States:
**AT BE CH DE FR GB IT LI LU NL SE**

(71) Applicant: **GULF AND WESTERN INDUSTRIES, INC.**
**1, Gulf + Western Plaza**
**New York, N.Y. 10023(US)**

(72) Inventor: **Manasso, John A.**
**3323 South Second Street**
**Whitehall Pennsylvania 18052(US)**

(74) Representative: **Sorrell, Terence Gordon et al,**
**Sorrell & Son Otham**
**Maidstone Kent ME15 8RR(GB)**

(54) Treated titanium dioxide product and process for making paper using same.

(57) A titanium dioxide pigment which has been treated with an amphoteric polyacrylamide is suitable for use in an alkaline papermaking process.

EP 0 079 784 A1

- 1 -

## TREATED TITANIUM DIOXIDE PRODUCT AND PROCESS FOR MAKING PAPER USING SAME

The invention relates to a process for the production of paper utilizing an alkaline method wherein titanium dioxide pigment which has been treated with an amphoteric agent comprising a polyacrylamide based material is added to the papermaking pulp during the processing thereof.

The invention provides for a novel method for preparing paper using an alkaline process incorporating a titanium dioxide pigment which has been treated with an amphoteric polyacrylamide based agent prior to the addition thereof into the papermaking pulp.

Numerous variations in the basic papermaking process designed to enhance the overall characteristics of the resultant paper products are known to the art.

Presently the major portion of paper is produced utilizing conventional acid-based type systems which employ titanium dioxide in order to enhance the physical characteristics of the paper products produced. In particular titanium dioxide additives are employed in order to improve the optical characteristics of paper products, for example opacity.

In recent years the production of paper utilizing alkaline processes has been expanding greatly. It has been found that in making the transition from conventionally employed acid based processes to alkaline processes there has resulted a loss in both the optical efficiency and the

- 2 -

degree of retention of titanium dioxide used to improve the optical characteristics referred to above.

It has thus been found necessary to modify conventionally employed processes in order to improve the resultant optical properties of the paper produced so as to achieve a commercially acceptable end product. One method utilized to effect an improvement in the desirable optical characteristics via the addition of titanium dioxide is to add various retention aids. These are commonly added to the papermaking pulp separately from the titanium dioxide itself.

In fact the utilization of retention aids, while improving the overall retention of titanium dioxide in the resultant end product, sometimes also results in a significant loss of optical efficiency, and thus the overall benefit of using such retention aids is, in many cases, questionable.

Exemplary of various processes utilizing retention aids in order to enhance the effects of incorporating titanium dioxide are the following:

United States Patent No.3,577,313, which issued to Bolger et al. on May 4, 1971, describes a class of condensation products of amines and epichlorhydrin cationic in nature, useful as pigment retention aids for use in acid papermaking processes. No data were given from

- -3 -

actual tests in a papermaking process.

United States Patent No.3,639,208, which issued to Varveri, et al. on February 1, 1972, concerns a class of amphoteric polymeric retention aids useful in paper-making over a pH range of 3.5 to 8.0. Examples illustrated retention improvements in acid systems of pH 4.1-6.3 only.

United States Patent No.3,926,718, which issued to Guilbault, et al. on December 16, 1975, is directed to the use of water-soluble monomer and the B block is derived from N-vinyl pyrrolidone useful as drainage and filler retention aids in systems of pH 4.5-7.0. Use of the materials resulted in significant retention improvements for a blend of titanium dioxide and clay. No effort was made to distinguish between the fillers nor was the influence of improved retention upon opacity discussed.

United States Patent No.3,949,014, which issued to Maki et al. on April 6, 1976, related to a binder comprising a polyamine-epichlorhydrine resin and an amphoteric high molecular weight compound useful in improving the pigment used in manufacturing paper. The combination of the epichlorhydrine resin and the amphoteric agent was more effective than a cationic agent or the epichlorhydrine alone.

- 4 -

United States Patent No.4,028,173, which issued to Olson on June 7, 1977, relates to a method of making titanium dioxide/Calcium carbonate combinations without involving a chemical reaction, containing up to 50% calcium carbonate, having an equal or higher scattering coefficient in paper as an equivalent amount of pure titanium dioxide. Calcium carbonate prevents agglomeration of titanium dioxide in the system described.

United States Patent No.4,064,304, which issued to Fujita et al. on December 20, 1977, relates to a coated synthetic paper for offset printing having a microporous and discontinuous coating layer formed, using a coating composition having an adhesive component and a pigment component, at least 5% by weight of said pigment component being an organic polymer pigment in the form of finely divided particles.

UnitedStates Patent No.4,066,495, which issued to Voigt, et al. on January 3, 1978, covers the use of a cationic starch and a polyacrylamide polymer as a retention aid in the manufacture of paper to allow for greater retention of pigments.

United States Patent No.4,077,930, which issued to Lim et al. on March 7, 1978, is directed to self-inverting emulsion polymers and their use as drainage aids, retention aids, saveall flotation aids and process water flocculants. The examples show significant improvements in the retention of a blend of titanium dioxide and clay. No mention was made of the influence of the additive upon the optical efficiency and retention of titanium dioxide.

None of the foregoing prior art teachings suggests the product or the method which is the subject of the present application which involves the pretreatment of titanium dioxide with an amphoteric polyacrylamide-based material in order to improve its overall combination of optical and retention properties in a resultant paper product via the incorporation thereof in an alkaline-based papermaking process.

It is, therefore, an object of the present invention to provide a product for use in the production of paper utilizing a conventional alkaline method wherein the overall combination of properties of the paper product obtained is substantially improved.

It is a further object of the present invention to provide a process for the production of paper utilizing a conventional alkaline based process wherein the overall combination of properties to be achieved by adding a titanium dioxide pigment is improved over such processes wherein such pigment and known retention aid are added to the process separately.

- 6 -

It is yet a further object of the present invention to provide for a process for the production of paper utilizing conventional alkaline based processes wherein a given overall level of combined properties may be achieved via the utilization of less titanium dioxide than would otherwise be required in such processes.

These and other objects of the invention will become apparent from the following description of the invention.

In accordance with the present invention a novel titanium dioxide pigment which has been treated with an amphoteric agent comprising a polyacrylamide based material is provided for.

The present invention also provides for a process for the production of paper utilizing an alkaline based method wherein titanium dioxide pigment which has been treated with an amphoteric agent comprising a polyacrylamide based material is added to the papermaking pulp during the processing thereof.

This invention provides for a novel method for preparing paper using an alkaline based process comprising incorporating a titanium dioxide pigment which has been treated with an amphoteric polyacrylamide based agent prior to the addition thereof into the papermaking pulp.

It has been found that the pretreatment of titanium dioxide with an amphoteric agent comprising a polyacrylamide based material prior to the incorporation thereof into the papermaking pulp to be used in conventional alkaline based paper-making processes serves to increase significantly the overall combination of properties of the resultant paper produced via such process, such as the optical efficiency and the retention of the titania, over the same such process wherein an equivalent amount of titanium dioxide without the indicated pretreatment may have been employed.

The beneficial effect to be obtained utilizing the pretreated titanium dioxide product of the present invention yields improved results even over processes utilizing equivalent amounts of titanium dioxide where the same amphoteric polyacrylamide based material may have been added separately to the papermaking system. Therefore it has been surprisingly discovered that the pretreatment of titanium dioxide in the manner indicated yields an unexpected increase in the overall combination of properties which is dependent upon the pretreatment itself. Thus, while it is apparent that the positive effects to be achieved will vary depending upon the pretreatment agent utilized, it is a necessary part of the invention that the pretreating agent be applied to the titanium dioxide component prior to the incorporation thereof into the papermaking system in order to achieve the highly beneficial results which may in fact be achieved utilizing the method of the present invention.

The particular method of manufacturing the paper product is not critical to the present invention, since it has been found that benefit can be obtained in paper containing various amounts of titanium dioxide and calcium carbonate. In carrying out the evaluation of the process of the present invention the pigments were added to the papermaking furnished by several different procedures. It has been determined that the pretreated titanium dioxide product and method of the present invention find their greatest usefullness in alkaline based papermaking systems as will be apparent from the examples which follow.

It has also been found that in carrying out the pretreatment of a titanium dioxide pigment with the indicated amphoteric polyacrylamide based agent, the incorporation of about 0.050-1.50 at.% of such an agent based upon the weight of the titanium dioxide treated will allow one to achieve the beneficial effects of the present invention. Preferably one will incorporate from about 0.75-1.00 wt.% of the amphoteric polyacrylamide based material, based upon the weight of the titanium dioxide pigment employed, in order to achieve the best results as will be illustrated by the following examples.

In carrying out the pretreatment of titanium pigments for utilization in alkaline based papermaking processes in order to improve the overall combination of properties according to the present invention, it has been found that an amphoteric polyacrylamide based material such as Hydraid 5504, which is a commercially available liquid amphoteric agent manufactured and sold by the Calgon Corporation, a subsidiary of Merch & Co. Inc. may be effectively employed.

The particular treatment method employed in order to effect the pretreatment of the titanium dioxide pigment with an appropriate amphoteric polyacrylamide agent such as Hydraid 5504 is not critical to the present invention and will be determined by the level of addition of such material actually utilized as well as by the amount of pigment to be treated.

In carrying out experimental work in connection with the development of the product and process of the present invention it was found that for Hydraid 5504 levels of the order of 0.5 - 1.0 wt.% based upon the weight of titanium dioxide, dilution of the Hydraid 5504 with trichloroethane and subsequent spraying onto the pigment would effect the required pretreatment. For levels greater than 1.0 wt.% the Hydraid 5504 may be incorporated

- 10 -

into the pigment as is and then blended in a suitable commercially available apparatus.

The nature of the present in-ention may be more clearly understood by recourse to the following examples, which are set forth for illustrative purposes only and are not to be construed as limiting the invention thereto.

### EXAMPLES

#### GENERAL COMMENTS

In determining the relative effectiveness of the pretreated pigment product and method of the present invention various tests were conducted on both a Noble and Wood handsheet machine as well as on a laboratory Fourdrinier. The basic test procedures employed were as follows.

The test pigments were incorporated into paper made on a 12" x 12" Noble and Wood handsheet machine. The apparatus is designed to simulate the forming, pressing and drying operations of a commercial Fourdrinier. In the tests demineralized water was used. Details are given below.

#### Preparation of Pulp Masterbatch

Eight hundred fifty grams of hardwood kraft pulp and 850 grams of pine pulp with 80 liters of water were processed to a 625-ml Schopper-Riegler freeness in a five-pound Valley beater.

After beating was completed, the pulp was divided into aliquots containing 28.3 grams of oven-dried fiber. One aliquot was used for testing each pigment sample.

Pigmentation of Pulp Suspension

The desired weight of oven-dried pigment was dispersed in 150 ml of demineralized water by mixing for three minutes in a Waring Blender. After dispersing the pigment, the slurry was washed into an aliquot of the pulp suspension. The pigmented pulp was then mixed for five minutes in a TAPPI standard pulp disintegrator. (In selected cases pigments were added dry at the disintegrator.)

After mixing, the suspension was poured into the proportioning tank of the Noble and Wood handsheet machine where it was diluted with demineralized water to provide a suspension containing 2.06 grams of oven-dried fiber per liter of suspension. At the proportioner 2% (based upon dry fiber) of the alkaline sizing agent (National Starch's 49-3705/29-4209 system) was added. The emulsion was prepared according to the procedure specified by National Starch. The entire mixture was then agitated for five minutes prior to sheet formation.

Formation of Handsheets

A two quart sample of the pigmented pulp suspension

- 12 -

was drawn from the proportioning tank and poured into the Noble and Wood sheet mold which had been partially filled with demineralized water. The suspension was further diluted at the mold with approximately 21 liters of demineralized water.

Also at the mold, the pH of the suspension was adjusted to 7.3 to 7.7. The drop valve on the sheet mold was then opened, allowing the water and unretained pigment and fiber to drain from the sheet. The wet sheet and supporting screen were then pressed, the combination of press weights and felt conditions being such that it gave a wet mat of 32% consistency.

After pressing, the sheet and screen were passed through a rotary dryer controlled at a temperature of $190^\circ F - 200^\circ F$. Drying time was three minutes.

The various steps used to form each handsheet were repeated five times to make five handsheet samples from each batch of pigmented pulp.

Calendering

Before calendering, the sheets were conditioned at $77^\circ F$ and 50% relative humidity for 18 hours. Each sheet was calendered with ten passes through a cotton steel nip with a loading of 1,666 pounds per lineal inch.

Testing the Handsheets

After calendering, the handsheets were analyzed to determine the ash and titanium contents and tested to determine opacity, brightness and basis weight. TAPPI Standard Method T-413 was used for the ash determination. Opacity and brightness were determined on a spherical reflectometer. The Autrometer, an x-ray spectrometer, was used in determining titanium content of the sheets.

### LABORATORY FOURDRINIER TEST PROCEDURE

The following procedure was used for evaluating pigments with the laboratory Fourdrinier.

### Water Supply

Raw well water was used.

### Preparation of Pulp Masterbatch

The pulp furnish was the same as that used in the handsheet tests. Fifty-five gallon drums were used for blending; and after blending, the pulp was divided into aliquots for testing the various pigment systems.

### Addition of Pigments

In all tests six percent total pigment, based upon the dry weight of the fiber, was added in slurry form to the pulp suspension at the mixing tank of the Fourdrinier. After pigment addition and blending, 0.2% (based on fiber) of the sizing emulsion was added. The pH of the mixture was then adjusted to 7.3-7.7 and the suspension mixed for 20 minutes. The entire suspension was then pumped to the Fourdrinier for sheet formation. The wire speed was five

- 14 -

feet per minute.

The white-water system employed was of the "single loop" type, in that the tray water was recirculated back through a constant-volume tank to a mixing area directly behind the headbox where it was mixed with the incoming pulp. Overflow water from the constant-volume tank and water pulled through the vacuum system were not reused.

At the start of each run the white-water system was filled with fresh water. It reached equilibrium with respect to pH in approximately ten minutes, and paper samples were collected for analysis after equilibrium had been attained.

### Analysis and Testing of Paper

The paper rolls were cut into 8-1/2" x 11" sheets; and the sheets were evaluated for ash content, opacity, brightness, and basis weight like the handsheets. A sample of the pulp-pigment suspension was taken before the start of each run so that overall pigment retention could be calculated.

### PROCEDURE FOR EMULSIFICATION OF 29-4209 WITH 49-3705

The following procedure was developed by National Starch and Chemical, Division of Unilever.

### Emulsification Equipment

1. Waring Blendor 1120 (Cenco 17225) or equivalent.

2. Powerstat (Cenco 8029701)

3. Semi-micro Monel cup (Cenco 17246-2)

Procedure

1. Cook 8.25 g 49-3705 (as supplied by National Starch) in 85 cc water at a temperature of $95^{\circ}C$-$97^{\circ}C$ for 20 minutes with constant agitation.

2. Cool to room temperature with agitation, and transfer the cook to the semi-micro cup. An additional 25 cc of water should be used to aid this transfer.

3. Place the cup on the Waring Blendor, agitate at a Powerstat setting of 90, and add 7.5 g of 29-4209 (National Starch).

4. Emulsify for three minutes at maximum Powerstat setting (140 volts).

5. Immediately transfer the emulsion to a one-liter volumetric flask, using extra water to aid the transfer. Fill the flask to one liter. Fairly vigorous mechanical agitation may be required to insure uniformity of the diluted emulsion.

The resultant emulsion contains 0.75% 29-4209 and 0.75% 49-3705 by weight and should have a particle size no greater than 2 microns, with the average under 1 micron.

6. Before addition to the pulp furnish, the emulsion should be further diluted with at least nine

- 16 -

parts water to one part emulsion. The furnish should be at or under 1.0% consistency. The desired quantity of diluted emulsion is added slowly to the furnish aliquot with light agitation to insure good distribution and mixed for 30 seconds prior to sheet formation.

### EXAMPLES I-II

In order to determine the relative effect upon the optical efficiency and retention of titanium dioxide in alkaline-based papermaking systems, tests were under-taken to evaluate the scattering coefficient of the titanium dioxide incorporated, as well as the percentage of titanium dioxide retained utilizing HORSE HEAD A-410, anatase titanium dioxide, both with and without the addition of calcium carbonate. Tests were under-taken using both the handsheet and Fourdrinier procedures set forth above. The results were as illustrated in Table 1.

The results of these tests indicate that in alkaline papermaking systems containing calcium carbonate both the retention and optical efficiency of the titanium dioxide employed are negatively effected by the presence of the calcium carbonate extender.

### EXAMPLES III-XIV

Tests were undertaken using various retention aids including Hydraid 5504 in order to determine the effect of the direct addition of said aids to the papermaking pulp used in the preparation of handsheets which were prepared in accordance with the above procedure. In all cases the retention aids were prepared as 1 gram/ liter solutions and added to the diluted pigmented pulp suspension at the proportioner of the handsheet machine. The results of the retention and for the scattering coefficient determinations were as set forth in Table 2.

## TABLE 1 - EXAMPLES I-II

### TITANIUM DIOXIDE EXTENDED WITH CALCIUM CARBONATE IN FILLED PAPER

| Example | Pigment System | Handsheet Test Results | | Fourdrinier Test Results | |
|---|---|---|---|---|---|
| | | Scattering Coefficient of $TiO_2$ | % Single pass $TiO_2$ Retention | Scattering Coefficient of $TiO_2$ | % Overall $TiO_2$ Retention |
| 1 | Titanium Dioxide* | 0.82 | 35 | 0.61 | 78 |
| II | 70% Titanium Dioxide* | 0.61 | 21 | 0.40 | 53 |
| | 30% Calcium Carbonate ** | | | | |

* HORSE HEAD A-410, G&W Natural Resources Group
** Albacar 5960, Pfizer, Minerals Pigments & Metals Division

TABLE 2 - EXAMPLES III-XIV

EVALUATION OF RETENTION AIDS IN HANDSHEET TESTS

| Example | Pigment System | Retention Aid Type | level (% on pulp) | % Single-pass $TiO_2$ Retention | Scattering Coefficient of $TiO_2$ |
|---------|----------------|--------------------|-------------------|---------------------------------|-----------------------------------|
| III | (70% Titanium Dioxide [3]) | None | -- | 26 | 0.67 |
| IV | (30% Calcium Carbonate [4]) | Betz 1260 (Cationic) | 0.25 | 28 | 0.63 |
| V | | | 1.0 | 30 | 0.65 |
| VI | | Hydraid 5504 [1] (Amphoteric) | 0.25 | 32 | 0.63 |
| VII | | | 1.0 | 52 | 0.62 |
| VIII | | Nalco 623 (Anionic) | 0.25 | 31 | 0.58; |
| IX | | | 1.0 | 35 | 0.67 |
| X | | Natron 6056 [2] (Amphoteric) | 0.25 | 27 | 0.55 |
| XI | | | 1.0 | 33 | 0.61 |
| XII | | Experimental (Cationic) | 0.25 | 32 | 0.60 |
| XIII | | | 1.0 | 36 | 0.64 |
| XIV | 100% Titanium Dioxide | None | -- | 45 | 0.75 |

[1] Merck/Calgon

[2] Unilever/National Starch

[3] HORSE HEAD A-410, G&W Natural Resources Group

[4] Albacar 5960

- 20 -

These date indicate that in general the various retention aids produced an increase in pigment retention and a loss of optical efficiency. The most significant increase in retention was obtained when utilizing Hydraid 5504. This additive also produced a small drop in optical efficiency, as measured by the scattering coefficient of the titanium dioxide in the sheet.

EXAMPLES XV-XL1

A number of tests were carried out utilizing the handsheet test procedure set forth above in order to determine the effectiveness of treatment of titanium dioxide both with and without calcium carbonate utilizing Hydraid 5504 as the treating agent.

The retention and scattering coefficient date of titanium dioxide treated with various levels of Hudraid 5504 when tested in a papermaking formulation with no calcium carbonate are set forth in Table 3 (Examples XV-XXIII). Similar test results for blends of titanium dioxide treated with Hydraid 5504 and calcium carbonate are set forth in Table 4 (Examples XXIV-XL1).

In the preparation of the treated pigments, Hydraid 5504 was diluted with trichloroethane and sprayed onto the titanium dioxide pigment for the 0.5% and 1.0% treatment levels. For the higher treatment levels the Hydraid 5504 was utilized as received by dripping it onto the pigment and blending the mixture in a commercial blending apparatus. Tests were conducted on both the as-prepared pigments and portions which were mikropulverised. After treatment the data show that treatment of titanium dioxide with 1% to2% Hydraid 5504 resulted in a significant improvement in retention. In the formulations with calcium carbonate, there were a number of instances where the treatment did not adversely influence the scattering coefficient.

## TABLE 3 - EXAMPLES XV-XXIII

## HYDRAID-TREATED TITANIUM DIOXIDE* IN ALKALINE PAPER

### (TiO$_2$ as Single Pigment)

| Example | Treatment % Hydraid 5504 | Mikropulverized | % Single-Pass TiO$_2$ Retention | Scattering Coefficient or TiO$_2$ |
|---------|--------------------------|-----------------|---------------------------------|-----------------------------------|
| XV | None | | 51 | 0.74 |
| XVI | 0.5 | Yes | 59 | 0.54 |
| XVII | 1.0 | | 60 | 0.59 |
| XVIII | 1.5 | | 58 | 0.61 |
| XIX | 2.0 | | 67 | 0.69 |
| XX | 0.5 | No | 56 | 0.56 |
| XXI | 1.0 | | 62 | 0.55 |
| XXII | 1.5 | | 65 | 0.68 |
| XXIII | 2.0 | | 67 | 0.67 |

* HORSE HEAD A-410

TABLE 4  -  EXAMPLES XXIV-XL1

HYDRAID-TREATED TITANIUM DIOXIDE* IN ALKALINE PAPER

(TiO$_2$ Blended with CaCO$_3$** (70% tiO$_2$ -30% CaCO$_3$))

| Example | Treatment % Hydraid 5504 | Treated TiO$_2$ Mikropulverized (?) | Pigments Added to pulp as | | % Single-Pass TiO$_2$ Retention | Scattering Coefficient of TiO$_2$ |
|---|---|---|---|---|---|---|
| | | | Slurry | Dry Blend | | |
| XXIV | None | -- | X | | 33 | 0.60 |
| XXV | | | | X | 41 | 0.60 |
| XXVI | 0.5 | No | X | | 33 | 0.34 |
| XXVII | | No | | X | 45 | 0.61 |
| XXVIII | 0.5 | Yes | X | | 36 | 0.35 |
| XXIX | | Yes | | X | 47 | 0.55 |
| XXX | 1.0 | No | X | | 49 | 0.52 |
| XXXI | | No | | X | 55 | 0.55 |
| XXXII | 1.0 | Yes | X | | 50 | 0.53 |
| XXXIII | | Yes | | X | 56 | 0.50 |
| XXXIV | 1.5 | No | X | | 57 | 0.54 |
| XXXV | | No | | X | 63 | 0.60 |
| XXXVI | 1.5 | Yes | X | | 61 | 0.58 |
| XXXVII | | Yes | | X | 64 | 0.57 |
| XXXVIII | 2.0 | No | X | | 66 | 0.62 |
| XXXIX | | No | | X | 68 | 0.59 |
| XL | 2.0 | Yes | X | | 56 | 0.58 |
| XL1 | | Yes | | X | 65 | 0.58 |

* HORSE HEAD A-410

** Albacar 5960

0079784

- 24 -

EXAMPLES  XLII-L

Various tests were undertaken utilizing the laboratory Fourdrinier in accordance with the test procedure set forth above in order to evaluate the effect of direct addition of Hydraid 5504 versis the utilization of an equivalent amount of Hydraid 5504 as a pretreatment for titanium dioxide at various treatment levels.

In the tests, the titanium dioxide, either treated or untreated, was slurried separately by hand stirring with a spatula. Each of the two slurries were added to the pulp suspension at the mixing tank of the Fourdrinier. When Hydraid 5504 was tested as a direct additive, it was first diluted to 0.5% and then added to the pigmented-pulp suspension. All tests were conducted using a furnish with pH of 7.3-7.5.

Papers prepared in these runs were tested for optical properties and analyzed for pigment content. From the results, the scattering coefficient of the titanium dioxide, its retention, and the pigment addition required to obtain a finished sheet with a scattering power (Sx) of 3.0 were calculated. This last calculation (F.A.Steele Tech. Assoc. Papers TAPPI 18, 288-304 (1935) combines the properties of retention and optical efficiency of titanium dioxide and is a measure of the overall performance of the pigment. Scattering power of paper is based upon the opacity, brightness and basis weight of the sheet. It is the main interest to the papermaker.

The calculated results as set forth in Table 5 (Examples XLII-L) show that Hydraid 5504, either as a treatment for titanium dioxide such as Horse Head A-410 or as a separate additive to the system, produced an increase in titanium dioxide retention and a decrease in its scattering coefficient. Overall, pretreatment of the titanium dioxide pigment with Hydraid 5504 was more effective than separate addition, as the optical efficiency was reduced to a lesser degree while in most cases similar retention was obtained. THis advantage can be seen by comparing the amount of titanium dioxide required to obtain sheets with the same optical properties. Wieh 1.0% and 1.5% Hydraid 5504 the requirement was 12% to 19% less for the treated pigments than for separate additions of Hydraid 5504 and an untreated titanium dioxide pigment.

## TABLE 5 - EXAMPLES XLII-L

### FOURDRINIER EVALUATION OF HYDRAID-TREATED TITANIUM DIOXIDE*
(30-Lb/Ream sheets)

| Example | % Hydraid 5504 (Based on $TiO_2$) | | Scattering Coefficient of $TiO_2$ | %Overall $TiO_2$ Retention | % $TiO_2$ to be added for a sheet with $S_x$ = 3.0 |
|---------|-----------|----------|--|--|--|
| | Treatment | Additive | | | |
| XLII | None | None | 1.22 | 51 | 7.3 |
| XLIII | 0.5 | None | 1.00 | 65 | 7.0 |
| XLIV | None | 0.5 | 0.72 | 60 | 10.2 |
| XLV | 0.75 | None | 0.95 | 72 | 6.8 |
| XLVI | None | 0.75 | 0.85 | 73 | 7.5 |
| XLVII | 1.0 | None | 0.89 | 75 | 6.9 |
| XLVIII | None | 1.0 | 0.72 | 72 | 8.5 |
| XLIX | 1.5 | None | 0.89 | 78 | 6.6 |
| L | None | 1.5 | 0.71 | 83 | 8.1 |

* HORSE HEAD A-410

- 27 -

While the invention has been described with reference to a number of embodiments, it will be apparent to one skilled in the art that there are numerous additional variations which properly fall within the range of this invention. Therefore, it should be understood that the foregoing embodiments and examples are set forth to illustrate the advantages which may be achieved utilizing the present invention and should not be interpreted as limiting the scope of the invention.

- 1 -

CLAIMS:

1. A titanium dioxide pigment which has been treated with an amphoteric agent comprising a polyacrylamide based material suitable for use in the making of paper.

2. A product according to claim 1 wherein the amphoteric agent is Hydraid 5504.

3. A product according to claim 1 wherein the titanium dioxide is in the anatase crystal form.

4. A product according to claim 1 wherein the amphoteric agent has been applied to the titanium dioxide by dissolving the amphoteric agent and spraying the solution onto the titanium dioxide.

5. A product according to claim 1 wherein the amphoteric agent has been applied to the titanium dioxide by admixing the amphoteric agent with the pigment and blending the mixture.

6. A product according to claim 1 wherein the titanium dioxide has been treated with from about 0.50-1.5 wt % of the amphoteric agent based upon the weight of the titanium dioxide.

7. A product according to claim 1 wherein the titanium dioxide has been treated with from about 0.75-1.00 wt.% of the amphoteric agent based upon the weight of the titanium dioxide.

8. A process for the production of paper utilizing an alkaline based method wherein titanium dioxide pigment which has been treated with an amphoteric agent comprising a polyacrylamide based material is added to the papermaking pulp during the processing thereof.

9.  A process according to Claim 8 wherein the amphoteric agent is Hydraid 5504.

10.  A process according to claim 8 wherein the titanium dioxide is in the anatase crystal form.

11.  A process according to claim 8 wherein the amphoteric agent is applied to the titanium dioxide prior to its incorporation into the papermaking process by dissolving the amphoteric agent and spraying the solution onto the titanium dioxide.

12.  A process according to claim 8 wherein the amphoteric agent is applied to the titanium dioxide prior to its incorporation into the papermaking process by admixing the amphoteric agent with the pigment and blending the mixture.

13.  A process according to claim 8 wherein the titanium dioxide has been treated with from about 0.050-1.5 wt.% of the amphoteric agent based upon the weight of the titanium dioxide.

14.  A process according to claim 8 wherein the titanium dioxide has been treated with from about 0.75-100 wt.% of the amphoteric agent based upon the weight of the titanium dioxide.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 181 567 (M.C. RIDDELL et al.)<br>* column 2, line 20 - column 4, line 60; column 5, lines 20-23 * | 1,5,8, 12 | D 21 H    3/78<br>C 09 C    1/36 |
| D,A | US-A-4 077 930 (S.K. LIM et al.)<br>* column 1; example 42; column 12, line 34 - column 13, line 4; column 14, line 50 - column 16, line 34 * | 1,8 | |
| D,A | US-A-3 639 208 (F.S. VARVERI et al.)<br>* the whole document * | 1,8 | |
| A | US-A-4 205 997 (R. HESSE et al.)<br>* column 2, line 20 - column 4, line 29 * | 1,4-6 | TECHNICAL FIELDS SEARCHED (Int Cl. ³)<br><br>C 09 C<br>D 21 H |

The present search report has been drawn up for all claims

| Place of search<br>THE HAGUE | Date of completion of the search<br>19-01-1983 | Examiner<br>NESTBY K. |
|---|---|---|